(19) **Europäisches Patentamt / European Patent Office / Office européen des brevets**

(11) **EP 1 490 835 B1**

(12) **EUROPEAN PATENT SPECIFICATION**

(45) Date of publication and mention
of the grant of the patent:
**14.02.2007 Bulletin 2007/07**

(21) Application number: **03706820.2**

(22) Date of filing: **11.03.2003**

(51) Int Cl.:
***G06T 9/00*** (2006.01)

(86) International application number:
**PCT/IB2003/000939**

(87) International publication number:
**WO 2003/081534 (02.10.2003 Gazette 2003/40)**

(54) **VIDEO SIGNAL POST-PROCESSING METHOD**

BILDSIGNALNACHBEARBEITUNGSVERFAHREN

PROCEDE DE POST-TRAITEMENT DE SIGNAUX VIDEO

(84) Designated Contracting States:
**AT BE BG CH CY CZ DE DK EE ES FI FR GB GR HU IE IT LI LU MC NL PT RO SE SI SK TR**

(30) Priority: **26.03.2002 FR 0203775**

(43) Date of publication of application:
**29.12.2004 Bulletin 2004/53**

(73) Proprietor: **Koninklijke Philips Electronics N.V.
5621 BA Eindhoven (NL)**

(72) Inventor: **GESNOT, Arnaud,
c/o Société Civile SPID
F-75008 Paris (FR)**

(74) Representative: **van Oudheusden-Perset, Laure E.
et al
Philips Corporate Intellectual Property
156, Boulevard Haussmann
75008 Paris (FR)**

(56) References cited:
**WO-A-01/24115**          **US-A- 5 974 197**

- **ATZORI L ET AL: "A real-time visual postprocessor for MPEG-coded video sequences" SIGNAL PROCESSING. IMAGE COMMUNICATION, ELSEVIER SCIENCE PUBLISHERS, AMSTERDAM, NL, vol. 16, no. 8, May 2001 (2001-05), pages 809-816, XP004249808 ISSN: 0923-5965**
- **HO Y-S ET AL: "CONTOUR-BASED POSTPROCESSING OF CODED IMAGES" PROCEEDINGS OF THE SPIE, SPIE, BELLINGHAM, VA, US, vol. 1199, no. PART 3, 1989, pages 1440-1449, XP000852904**

**Description**

FIELD OF THE INVENTION

The present invention relates to a method of post-processing pixels contained in a sequence of digital images, said method comprising a step of detecting pixels belonging to natural contours inside an image and a pixel filtering step.

It also relates to a device implementing such a post-processing method.

The present invention in particular finds its application in the field of video coding. The coding technique is based for example on the MPEG (from the English "Moving Pictures Expert Group") standard or an equivalent standard, by virtue of which a sequence of digital images is previously coded and then decoded in the form of blocks of data, the present invention allowing the correction of the data included in the decoded sequence of digital images in order to attenuate the visual artifacts caused by the block-based coding technique. Thus it can advantageously be integrated in video decoders or in television receivers.

BACKGROUND OF THE INVENTION

The coding of an image sequence at low bitrate, using the MPEG coding technique or equivalent techniques, introduces visual artifacts into the decoded images. Amongst the most usual artifacts there can first of all be cited blocking artifacts which result in a visible division of the image into blocks, generally of 8 x 8 pixels. A second type of artifact consists of ringing artifacts. These are multiple echoes of natural contours, this visual defect also being referred to as the Gibbs phenomenon. Since these artifacts can be a great nuisance, it is necessary to correct them.

Though there exist many methods for correcting blocking artifacts, there are on the other hand very few methods for correcting ringing artifacts.

As an example, the paper entitled "A real-time visual postprocessor for MPEG-coded video sequences" by Atzori et al, in SIGNAL PROCESSING. IMAGE COMMUNICATION, ELSEVIER SCIENCE PUBLISHERS, AMSTERDAM, NL, vol. 16, no. 8, May 2001 (2001-05), pages 809-816, discloses a method of post-processing pixels contained in a sequence of digital images. Said method comprises:

- a step of detecting a block containing edges, said step being performed in the transformed domain (i.e. the DCT domain);
- a step of detecting and classifying pixel inside an edged block thus detected using a gradient filter, blocking pixels being present at block boundaries and having a gradient filtered value lower than a first threshold TH, natural contour pixels having a gradient filtered value higher than the first threshold TH on block boundaries and higher than a second threshold TL for the rest of the edged block (TL < TH), and mosquito pixels being the pixels other than the natural contour pixels which are inside the edged block but not at the block boundaries;
- a step of filtering pixel according to a 3 x 3 or 5 x 1 (i.e. 1-D) pattern depending on their classification, blocking pixels being filtered using a 1-D low pass filter, natural contour pixels being filtered according to a 3 x 3 directional filter, and mosquito pixels being filtered according to another 3 x 3 directional filter.

As another example, the international patent application WO 2001/2411 (internal reference: PHF99584) describes such a method for the post-processing of pixels contained in a sequence of digital images intended to reduce ringing artifacts. This post-processing method comprises a step of detecting pixels belonging to natural contours inside an image using for example Sobel filters.

It also comprises a step of deciding on the filtering of a current pixel according to the surroundings of said pixel. For this purpose, the post-processing method is able to divide the image into zones of 4 x 4 pixels, the current pixel belonging to a central zone, and the East, North, West and South zones adjacent to the central zone being taken into consideration. Thus a current pixel in the central zone is filtered if the following three cumulative conditions are satisfied:

- it does not belong to a natural contour,
- the number of natural contour pixels present in the 5 zones is less than a first predetermined value Nmax,
- the number of natural contour pixels present in each zone is greater than a second predetermined value Nmin.
  Finally, the post-processing method comprises a step of median filtering of a pixel to be filtered thus determined, from a vicinity of said pixel. The vicinity of current pixel comprises certain pixels amongst a set comprising said current pixel and the East, North, West and South pixels which are adjacent to it, depending on the fact that some of said adjacent pixels are natural contour pixels or not.
  Such a post-processing method is however relatively complex to implement since it requires having values of pixels belonging to 5 different zones.

SUMMARY OF THE INVENTION

The aim of the present invention is to propose a method for the post-processing of pixels contained in a sequence of digital images, which is more simple to implement.

To this end, the post-processing method according to the invention is characterized in that it also comprises a step of detecting an investigation zone corresponding to a coding block, a current pixel being filtered if it has not been detected as being a natural contour pixel and if it belongs to a coding block containing at least one natural contour pixel.

Thus the present invention takes account of the values of pixels belonging to a coding block, generally of 8 lines of 8 pixels, rather than the values of pixels belonging to 5 different zones of 4 lines of 4 pixels. The present invention is therefore able to make a filtering decision from a smaller number of pixels more easily accessible since they are distributed over 8 lines instead of 12, which makes the implementation of the post-processing method more simple, from a memory access point of view.

In addition, the present invention stems from the following analysis. The ringing artifacts result from an intense quantization of the transformed DCT (standing for "Discrete Cosine Transform") coefficients inside the coding block. Starting from this assumption, it is possible to deduce that the ringing artifacts, which correspond as we have seen previously to an echo of a natural contour, can be found only in an investigation zone corresponding to a coding block where at least one natural contour is present. The consequence of this analysis is that the investigation zones not containing any natural contour are not filtered, which could happen with the method of the state of the art where the filtering decision did not take account of the coding blocks. The post-processing method according to the invention is thus simplified further since it processes fewer pixels by eliminating all the pixels in the investigation zones which do not contain a natural contour. It is also more effective because it takes account of the block-based coding technique.

The present invention also relates to the device implementing the pixel post-processing method according to the invention.

BRIEF DESCRIPTION OF THE DRAWINGS

The invention will be further described with reference to examples of embodiments shown in the drawings to which, however, the invention is not restricted.

- Fig. 1 depicts the functioning of a complete chain for processing a digital video signal,
- Fig. 2 is a schematic diagram of the pixel post-processing method according to the invention,
- Fig. 3 depicts a vicinity of a current pixel to be filtered, and

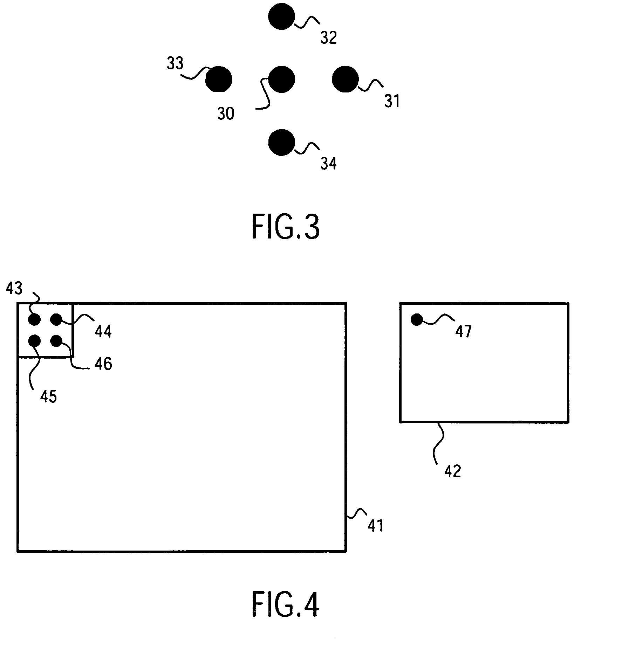

- Fig. 3 depicts the detection of a chrominance sample belonging to natural contours from a luminance sample.

DESCRIPTION OF PREFERRED EMBODIMENTS

The present invention relates to a method for the post-processing of pixels contained in a sequence of digital images. Said method is intended to improve the visual quality of the digital images when these have been previously coded and then decoded according to a block-based coding technique.

The post-processing method was developed in particular for a coding technique based on the MPEG-2 or MPEG-4 standard. It nevertheless remains applicable for any other block-based coding technique such as H.261, H. 263 or H.26L for example.

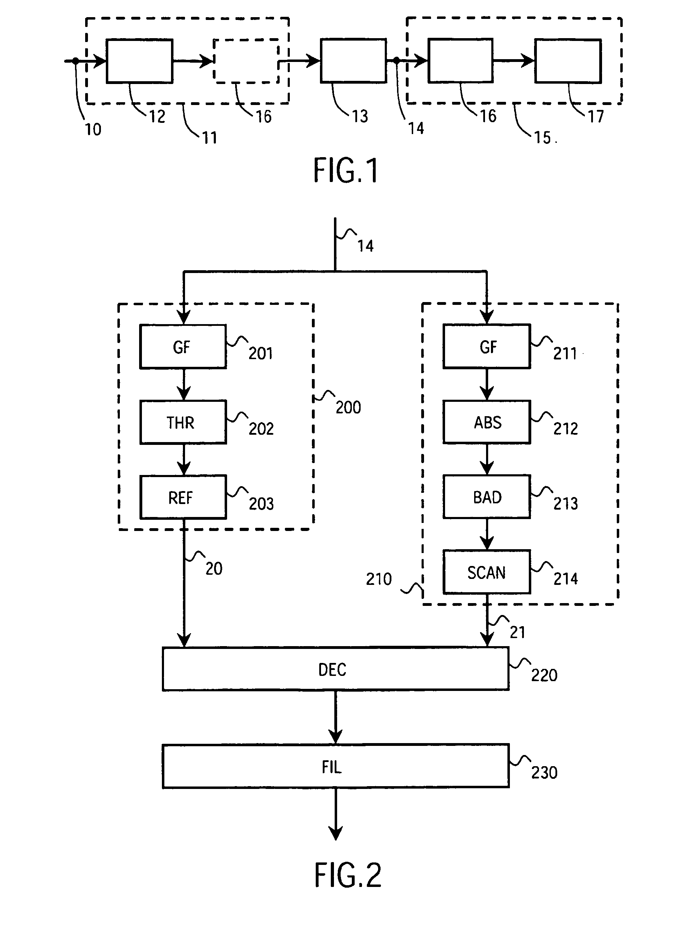

Fig. 1 illustrates the functioning of a complete chain for processing a digital video signal comprising coded digital images (10). Said chain comprises a video decoder (11) comprising a decoding module (12) and intended to transmit a decoded image (14) via a channel (13) to a television receiver (15) intended to display the digital image thus decoded. A correction or post-processing device (16), in contradistinction to a preprocessing of the signal which would have taken place before the coding of said signal, improves the visual quality of the digital image with a view to its display on the screen (17). The post-processing device is situated either at the output of the video decoder as depicted in dotted lines or at the input of the television receiver as depicted in solid lines.

In a first embodiment, the post-processing method is implemented at a television receiver. The pixel post-processing method illustrated in Fig. 2 thus comprises the following steps:

- First of all a step (200) of detecting pixels belonging to natural contours inside a decoded image (14). For this purpose, the detection step is based on a gradient filtering GF (201) preferably using two-dimensional Sobel filters, a filter Sh in the horizontal direction and a filter Sv in the vertical direction. It will be clear however to a person skilled in the art that other gradient filters can be used for detecting natural contours. The Sobel filters used are as follows:

$$Sh = \begin{bmatrix} -1 & -2 & -1 \\ 0 & 0 & 0 \\ 1 & 2 & 1 \end{bmatrix} \text{ and } Sv = \begin{bmatrix} -1 & 0 & 1 \\ -2 & 0 & 2 \\ -1 & 0 & 1 \end{bmatrix}$$

The Sobel filters are applied to the luminance component Y of the pixels of an image, the detection step resulting in an image of horizontal filtered data Gh = Y * Sh and an image of vertical filtered data Gv = Y * Sv.

Then a thresholding THR (202) is applied to each of the two maps of filtered pixels. All the pixels p(i,j) whose total filtered luminance value $G(i,j) = Gh(i,j)^2 + Gv(i,j)^2$ is greater than a predetermined threshold value T1 have the final value 1, i.e. they are detected as being natural contour pixels (20), the others having the value 0. The predetermined threshold value T1 is preferably an empirical value determined in an absolute manner from a certain number of sequences of digital images tested, equal, for example, to 12000 for luminance values of between 0 and 255. This thresholding can be refined as follows, a pixel being detected as a natural contour pixel if:

$$G[i,j] > T1 \text{ AND}$$

$$($$

$$((|Gv[i,j]| \geq |Gh[i,j]|) \text{ AND } (G[i,j] \geq G[i,j\text{-}1]) \text{ AND } (G[i,j] \geq G[i,j\text{+}1]))$$

$$\text{OR}$$

$$((|Gh[i,j]| \geq |Gv[i,j]|) \text{ AND } (G[i,j] \geq G[i\text{-}1,j]) \text{ AND } (G[i,j] \geq G[i\text{+}1,j]))$$

$$)$$

The predetermined threshold value can also be determined in a relative manner as being equal to T2, whose calculation method is more complicated:

$$T2 = \frac{\sum_{i=1}^{n} \sum_{j=1}^{m} \sqrt{Gh(i,j)^2 + Gv(i,j)^2}}{n \cdot m}$$

where n is the number of lines and m the number of columns in the image.

In addition, the detection step is able to take into consideration the environment of a natural contour pixel thus detected. Thus it comprises a refinement substep (203) such that, if a vicinity comprising the 8 pixels surrounding such a pixel contains no other natural contour pixel, then said pixel is no longer assimilated to a natural contour pixel. Thus an isolated natural contour pixel is not considered to be a true natural contour pixel (20).

The post-processing method also comprises a step (210) of detecting an investigation zone (21) corresponding to a coding block. At the television receiver, no information relating to the decoding is accessible. It is therefore necessary to analyze the content of at least one image in order to determine the position and size of the investigation zone corresponding to a coding block. Such a block generally comprises 8 lines of 8 pixels in the case of the MPEG standard but the investigation zone may have a different size after any resampling of the image during decoding, taken by assumption hereinafter at a size of 8 lines of 10, 12 or 16 pixels in accordance with the main resampling formats allowed by the MPEG standard. A simple adaptation can be made to the method described below for taking account of other formats.

The step of detecting the investigation zone is preferably based on the method described in the International patent application WO 01/20912 (internal reference: PHF99579). The step of detecting the investigation zone comprises a horizontal and vertical gradient filtering substep GF (211) for the luminance pixels y(i,j) of a digital image or for a portion of a digital image in the sequence, where i and j correspond to the position of the pixel in the image. The gradient filtering step uses for example the previously mentioned Sobel filters. There are then obtained tables of pixels filtered horizontally xh(i,j) and vertically xv(i,j), whose absolute value ABS (212) is taken in order to obtain xah(i,j) and xav(i,j).

The investigation zone detection step also comprises a substep of detecting blocking artifacts BAD (213). Thus a vertical blocking artifact is detected if:

$$\begin{cases} xa_h[n,j] > xa_h[n,j-1] + \dfrac{\overline{xa_h}}{2} \\ xa_h[n,j] > xa_h[n,j+1] + \dfrac{\overline{xa_h}}{2} \end{cases} \quad \forall n \in [i, i+7]$$

Likewise, a horizontal blocking artifact is detected if:

$$\begin{cases} xa_v[i,m] > xa_v[i-1,m] + \dfrac{\overline{xa_v}}{2} \\ xa_v[i,m] > xa_v[i+1,m] + \dfrac{\overline{xa_v}}{2} \end{cases} \quad \forall m \in [j, j+k-1] \text{ with } k = 8, 10 \text{ or } 12$$

An analysis step SCAN (214) then determines the size and position of the investigation zone corresponding to a coding block.

For this purpose, when a vertical blocking artifact is detected for a column j, the value vTab8(j%8), vTablO (j%10) and vTab12(j%12) of 3 vectors vTab8, vTab10, vTab12 comprising 8,10 and 12 values is incremented, a%b or a modulo b being the operation, the result of which is the remainder of the division of a by b. Likewise, when a horizontal blocking artifact is detected at line i, the value hTab(i%8) of a vector hTab comprising 8 values is incremented.

In parallel and in order to determine the size of the investigation zone, a general counter is created and then incremented at the reading of each pixel of an image or portion of an image. It is set to zero when a vertical blocking artifact is detected. The principle of the determination is to know whether a current vertical blocking artifact is distant from the last vertical blocking artifact of 8, 10 or 12 pixels. Thus, if the value of the general counter between two vertical blocking artifacts is equal to 8, 10 or 12, then one of the counters grid8, grid 10 and grid 12 relating respectively to a width of the investigation zone of 8, 10 and 12 pixels is incremented. The width k of the investigation zone then corresponds to the counter which has the greatest value.

This indication gives the vector vTabk, k = 8, 10 or 12, to be taken into consideration from amongst the three possible vectors, and the origin of the investigation zone is determined by seeking the maximum values in the vectors hTab and vTabk.

Other methods of detecting the investigation zone are also possible such as the one, for example, described in the European patent application n° 1202577 (internal reference: PHFR000106).

- The post-processing method then comprises a filtering decision step (220): a current pixel is filtered only if it has not been detected as being a natural contour pixel and if it belongs to an investigation zone containing at least one natural contour pixel.
- Finally, the post-processing method comprises a filtering step (230): the pixels which satisfy the criteria set out above undergo a filtering. This filtering is preferably a median filtering. A mean filtering can also be envisaged.

This median filtering is able to replace a current pixel with a pixel from its vicinity. The vicinity of the current pixel comprises certain pixels amongst a set of pixels illustrated in Fig. 3 and comprising said current pixel (30) and the East (31), North (32), West (33) and South (34) pixels which are adjacent to it.

If none of the pixels in the vicinity is a natural contour pixel, then the value Y0 of the current pixel is replaced with the pixel whose value is the median MED amongst the five luminance values of the current pixels, East, North, West and South in the vicinity.

However, such a replacement preferably takes place only if this median value MED differs from the value Y0 of the current pixel only by a value Dmax less than a predetermined threshold, for example equal to 40 if the luminance values are between 0 and 255, that is to say in other words if:

Abs(MED-Y0) < Dmax, where Abs(x) is the function which gives the absolute value of x. Thus such a filtering makes it possible to avoid making erroneous corrections.

In the contrary case, the value Y0 of the current pixel preferably remains unchanged, in order to reduce the complexity of the method. Nevertheless it can also be envisaged opting for a median filtering of a set of pixels comprising the current pixel and some of the East, North, West and South pixels which are adjacent to it, depending whether these adjacent pixels are natural contour pixels or not, as described in the International patent application WO 2001/24115.

In a second embodiment, the post-processing method is implemented at a video decoder. Compared with the embodiment previously described at the television receiver, the post-processing method can be improved and simplified by using the decoding information accessible at the decoder. The post-processing method then comprises the following steps:

- a step (200) of detecting pixels belonging to natural contours inside an image. As in the first embodiment, this natural contour detection step is based on the use of Sobel filters Sh and Sv. In this second embodiment, the predetermined threshold value T1, determined in an absolute manner from a certain number of sequences of digital images tested, is taken to be equal to 20000.

In addition, the chrominance component of a pixel is taken into account in addition to the luminance component. For this purpose, the natural contour detection is not applied directly to the chrominance values of the pixels of an image but is deduced from the luminance values as follows, illustrated in Fig. 4 in the case of an image format of 4:2:0 where there is a chrominance sample U and a chrominance sample V for 4 luminance samples Y. Thus a value A(47) of chrominance U or V (42) is deduced from the corresponding 4 final values a (43), b (44), c (45), d (46) issuing from the pixel detection step (200) applied to the luminance (41) in the following manner:

$$A = a \ OR \ b \ OR \ c \ OR \ d$$

with a, b, c or d = 1 for a pixel with a natural contour and 0 otherwise.

Thus a chrominance sample is a sample belonging to a natural contour if at least one of the four luminance samples which correspond to it is a natural contour pixel.

The following steps are then the same for the luminance and chrominance components, namely:

- a step (210) of detecting an investigation zone (21) corresponding to a coding block. At the video decoder side, this step is easily performed because the coding blocks are directly accessible and therefore no longer require the steps of gradient filtering GF (211), calculation of absolute value (212), detection of blocking artifacts (213) and analysis (214);
- a filtering decision step (220): all the pixels belonging to an investigation zone containing at least one natural contour pixel and which are not natural contour pixels are intended to be filtered;
- a filtering step (230): the pixels to be filtered undergo a filtering, preferably median. This filtering depends on the quantization step QP of the coding block to which the pixel to be filtered belongs.

If the quantization step QP is strictly less than a first predetermined value Q1, no filtering is carried out, the quality of the coding being judged satisfactory.

If the quantization step QP is greater than or equal to the first predetermined value Q1 and less than or equal to a second predetermined value Q2, a median filtering identical to that described in the first embodiment is applied.

If the quantization step QP is strictly greater than the second predetermined value Q2, a strong correction must be applied. For this purpose, a mean filtering is applied using the values of a set of pixels comprising the current pixels and the East, North, West and South pixels which are adjacent to it.

Thus, if the pixel is not a natural contour pixel, its luminance value Y0 is replaced by the mean value Ymean:

$$Ymean = 1/5 \ * \ (Y0 + Y1 + Y2 + Y3 + Y4)$$

With:

- Y1 = Y(East) if the East pixel is not a contour pixel and Y1 = Y0 otherwise,
- Y2 = Y(North) if the North pixel is not a contour pixel and Y2 = Y0 otherwise,
- Y3 = Y(West) if the West pixel is not a contour pixel and Y3 = Y0 otherwise,
- Y4 = Y(South) if the South pixel is not a contour pixel and Y4 = Y0 otherwise.

Q1 and Q2 are values predetermined empirically, also respectively, for example at 5 and 20 in the case of the MPEG-4 standard, where the quantization step is between 1 and 31.

It is possible to implement the post-processing method according to the invention by means of a video decoder circuit or a television receiver circuit, said circuit being suitably programmed. A computer program contained in a programming memory can cause the circuit to perform the various operations described above with reference to Fig. 2. The computer program can also be loaded into the programming memory by the reading of a data medium such as for example a disk which contains said program. The reading can also take place by means of a communication network such as for example the Internet. In this case, a service provider will make the computer program available to interested parties in the form of a downloadable signal.

**Claims**

1. A method of post-processing pixels contained in a sequence of digital images, said images having been previously coded and decoded according to a block-based coding technique, said method comprising:

   - a first detection step (200) for detecting pixels belonging to natural contours (20) of objects inside an image,
   - a filtering step (230) for filtering pixels of a digital image so as to remove ringing artifacts, said filtering step being adapted to filter a current pixel if said current pixel has not been detected as being a natural contour pixel (20),

   said method being **characterized in that** it comprises a second detection step (210) for detecting a coding block (21), and **in that** the filtering step is further adapted to filter the current pixel if said current pixel belongs to a coding block (21) containing at least one natural contour pixel (20).

2. A post-processing method as claimed in Claim 1, in which the filtering step comprises median filtering, which is able to replace a current pixel with a pixel from a set comprising said current pixel and pixels surrounding the current pixel.

3. A post-processing method as claimed in Claim 2, in which a replacement takes place if a median value of the set of pixels differs from the value of the current pixel only by a value below a predetermined threshold.

4. A post-processing method as claimed in Claim 1, in which the first detection step comprises gradient filtering (201).

5. A post-processing method as claimed in Claim 1, wherein the gradient filtering uses a filter of the Sobel type.

6. A post-processing method as claimed in Claim 1, in which the filtering step is applied to a pixel in an investigation zone only if a quantization step for the corresponding coding block is greater than a predetermined value.

7. A decoding method intended to provide decoded digital images and comprising a post-processing method as claimed in Claim 1, in order to post-process the decoded digital images so as to supply post-processed digital images.

8. A device for post-processing pixels contained in a sequence of digital images, said images having been previously coded an decoded according to a block-based coding technique, said device comprising:

   - first detection means for detecting pixels belonging to natural contours (20) of objects inside an image,
   - filtering means for filtering pixels of a digital image so as to remove ringing artifacts, the filtering means being configured so that a current pixel is filtered if said current pixel has not been detected as being a natural contour pixel (20),
   said device being **characterized in that** it comprises second detection means for detecting a coding block (21), and **in that** the filtering means are configured so that the current pixel is filtered if said current pixel belongs to a coding block (21) containing at least one natural contour pixel (20).

9. A video decoder able to supply decoded digital images and comprising a post-processing device as claimed in Claim 8, able to post-process the decoded digital images so as to supply post-processed digital images.

10. A television receiver able to receive digital images and comprising a post-processing device as claimed in Claim 8, able to post-process the digital images so as to display post-processed digital images on the screen of the television receiver.

**11.** A computer program comprising a set of instructions which, when loaded into a circuit, causes the latter to perform all the steps of the digital image post-processing method as claimed in Claim 1.

**Patentansprüche**

**1.** Verfahren der Nachbearbeitung von Pixeln, die in einer Folge digitaler Bilder enthalten sind, wobei die Bilder vorher gemäß einer blockbasierten Codiertechnik codiert und decodiert worden sind, wobei das Verfahren umfasst:

- einen ersten Detektionsschritt (200) des Detektierens von Pixeln (20), die zu natürlichen Konturen von Objekten innerhalb eines Bildes gehören,
- einen Filterschritt (230) zum Filtern von Pixeln eines digitalen Bildes, um so Ringing-Artefakte zu entfernen, wobei der Filterschritt ausgelegt ist, ein aktuelles Pixel zu filtern, wenn das aktuelle Pixel nicht als Pixel (20) einer natürlichen Kontur detektiert worden ist,

wobei das Verfahren **dadurch gekennzeichnet ist, dass** es einen zweiten Detektionsschritt (210) zum Detektieren eines Codierblocks (21) umfasst, und **dadurch**, dass der Filterschritt ferner ausgelegt ist, das aktuelle Pixel zu filtern, wenn das aktuelle Pixel zu einem Codierblock (21) gehört, der mindestens ein Pixel (20) einer natürlichen Kontur enthält.

**2.** Nachbearbeitungsverfahren nach Anspruch 1, wobei der Filterschritt Medianfilterung umfasst, die ein aktuelles Pixel durch ein Pixel aus einer Menge ersetzen kann, die das aktuelle Pixel und Pixel umfasst, die das aktuelle Pixel umgeben.

**3.** Nachbearbeitungsverfahren nach Anspruch 2, wobei ein Ersetzen stattfindet, wenn sich ein Medianwert der Menge von Pixeln vom Wert des aktuellen Pixels nur um einen Wert unterhalb einer vorgegebenen Schwelle unterscheidet.

**4.** Nachbearbeitungsverfahren nach Anspruch 1, wobei der erste Detektionsschritt Gradientenfilterung (201) umfasst.

**5.** Nachbearbeitungsverfahren nach Anspruch 1, wobei die Gradientenfilterung einen Filter des Sobel-Typs verwendet.

**6.** Nachbearbeitungsverfahren nach Anspruch 1, wobei der Filterschritt auf ein Pixel in einer Untersuchungszone nur angewendet wird, wenn ein Quantisierungsschritt für den entsprechenden Codierblock größer als ein vorgegebener Wert ist.

**7.** Decodierverfahren, das zum Bereitstellen decodierter digitaler Bilder vorgesehen ist und ein Nachbearbeitungsverfahren nach Anspruch 1 umfasst, um die decodierten digitalen Bilder nachzubearbeiten, um so nachbearbeitete digitale Bilder zu liefern.

**8.** Anordnung zur Nachbearbeitung von Pixeln, die in einer Folge digitaler Bilder enthalten sind, wobei die Bilder vorher gemäß einer blockbasierten Codiertechnik codiert und decodiert worden sind, wobei die Anordnung umfasst:

- erste Detektionsmittel zum Detektierens von Pixeln (20), die zu natürlichen Konturen von Objekten innerhalb eines Bildes gehören,
- Filtermittel zum Filtern von Pixeln eines digitalen Bildes, um so Ringing-Artefakte zu entfernen, wobei die Filtermittel so konfiguriert sind, dass ein aktuelles Pixel gefiltert wird, wenn das aktuelle Pixel nicht als Pixel (20) einer natürlichen Kontur detektiert worden ist,

wobei die Anordnung **dadurch gekennzeichnet ist, dass** sie zweite Detektionsmittel zum Detektieren eines Codierblocks (21) umfasst, und dadurch, dass die Filtermittel so konfiguriert sind, dass das aktuelle Pixel gefiltert wird, wenn das aktuelle Pixel zu einem Codierblock (21) gehört, der mindestens ein Pixel (20) einer natürlichen Kontur enthält.

**9.** Videodecodierer, der zum Liefern decodierter digitaler Bilder in der Lage ist und eine Nachbearbeitungsanordnung nach Anspruch 8 umfasst, die in der Lage ist, die decodierten digitalen Bilder nachzubearbeiten, um so nachbearbeitete digitale Bilder zu liefern.

**10.** Fernsehempfänger, der zum Empfangen digitaler Bilder in der Lage ist und eine Nachbearbeitungsanordnung nach Anspruch 8 umfasst, die in der Lage ist, die digitalen Bilder nachzubearbeiten, um so nachbearbeitete digitale Bilder auf dem Bildschirm des Fernsehempfängers anzuzeigen.

**11.** Computerprogramm, das einen Satz von Befehlen umfasst, das, wenn es in eine Schaltung geladen ist, letztere veranlasst, alle Schritte des Nachbearbeitungsverfahrens digitaler Bilder nach Anspruch 1 durchzuführen.

## Revendications

**1.** Procédé de post-traitement de pixels contenus dans une séquence d'images numériques, lesdites images ayant été précédemment codées et décodées selon une technique de codage à base de blocs, ledit procédé comprenant:

- une première étape de détection (200) pour détecter des pixels appartenant à des contours naturels (20) d'objets à l'intérieur d'une image,
- une étape de filtrage (230) pour filtrer des pixels d'une image numérique de façon à retirer des artefacts oscillatoires, ladite étape de filtrage étant aménagée pour filtrer un pixel courant si ledit pixel courant n'a pas été détecté comme étant un pixel de contour naturel (20),
ledit procédé étant **caractérisé en ce qu'**il comprend une deuxième étape de détection (210) pour détecter un bloc de codage (21), et **en ce que** l'étape de filtrage est de plus aménagée pour filtrer le pixel courant si ledit pixel courant appartient à un bloc de codage (21) contenant au moins un pixel de contour naturel (20).

**2.** Procédé de post-traitement selon la revendication 1, dans lequel l'étape de filtrage comprend un filtrage médian, qui est capable de remplacer un pixel courant par un pixel parmi un ensemble comprenant ledit pixel courant et les pixels entourant le pixel courant.

**3.** Procédé de post-traitement selon la revendication 2, dans lequel un remplacement a lieu si une valeur médiane de l'ensemble de pixels ne diffère de la valeur du pixel courant que d'une valeur inférieure à un seuil prédéterminé.

**4.** Procédé de post-traitement selon la revendication 1, dans lequel la première étape de détection comprend un filtrage gradient (201).

**5.** Procédé de post-traitement selon la revendication 1, dans lequel le filtrage gradient utilise un filtre de type Sobel.

**6.** Procédé de post-traitement selon la revendication 1, dans lequel l'étape de filtrage est appliquée à un pixel dans une zone d'investigation seulement si l'étape de quantification pour le bloc de codage correspondant est plus grande qu'une valeur prédéterminée.

**7.** Procédé de décodage conçu pour procurer des images numériques décodées et comprenant un procédé de post-traitement selon la revendication 1, de façon à post-traiter les images numériques décodées de manière à fournir des images numériques post-traitées.

**8.** Dispositif de post-traitement de pixels contenus dans une séquence d'images numériques, lesdites images ayant été précédemment codées et décodées selon une technique de codage à base de blocs, ledit dispositif comprenant:

- des premiers moyens de détection pour détecter des pixels appartenant à des contours naturels (20) d'objets à l'intérieur d'une image,
- des moyens de filtrage pour filtrer des pixels d'une image numérique de façon à enlever des artefacts oscillatoires, les moyens de filtrage étant configurés de manière à filtrer un pixel courant si ledit pixel courant n'a pas été détecté comme étant un pixel de contour naturel (20),
ledit dispositif étant **caractérisé en ce qu'**il comprend des deuxièmes moyens de détection pour détecter un bloc de codage (21), et **en ce que** les moyens de filtrage sont configurés pour que le pixel courant soit filtré si ledit pixel courant appartient à un bloc de codage (21) contenant au moins un pixel de contour naturel (20).

**9.** Décodeur vidéo capable de fournir des images numériques décodées et comprenant un dispositif de post-traitement selon la revendication 8, capable de post-traiter les images numériques décodées de façon à fournir des images numériques post-traitées.

**10.** Récepteur de télévision capable de recevoir des images numériques et comprenant un dispositif de post-traitement

**EP 1 490 835 B1**
selon la revendication 8, capable de post-traiter les images numériques de façon à afficher des images numériques post-traitées à l'écran du récepteur de télévision.

11. Programme informatique comprenant un ensemble d'instructions qui, lorsque chargées dans un circuit, amènent ce dernier à réaliser toutes les étapes du procédé de post-traitement d'image numérique selon la revendication 1.

**10**

## FIG.1

## FIG.2

32

33 30 31

34

FIG.3

43 44

46

45

47

42

41

FIG.4